# EUROPEAN PATENT SPECIFICATION

(11) **EP 0 660 345 B1**
(45) Date of publication and mention of the grant of the patent: **09.06.1999**
(21) Application number: 94118313.9
(22) Date of filing: 21.11.1994
(51) Int. Cl.: H01G 9/058, H01G 9/00

(54) **Process for forming a polarizable electrode for a double-layer capacitor**
Verfahren zur Herstellung einer polarisierbaren Elektrode für einen Doppelschichtkondensator
Procédé de fabrication d'un électrode polarisable pour un condensateur à double couche

(30) Priority: 06.12.1993 JP 33972893
(43) Date of publication of application: 28.06.1995
(73) Proprietor: NISSHINBO INDUSTRIES, INC., Chuo-ku, Tokyo 103 (JP)
(72) Inventor: Saito, Kazuo, c/o Nisshinbo Industries, Inc., Adachi-ku, Tokyo 123 (JP); Hagiwara, Atsushi, c/o Nisshinbo Industries, Inc., Adachi-ku, Tokyo 123 (JP); Okamoto, Toshiharu, c/o Nisshinbo Industries, Inc., Adachi-ku, Tokyo 123 (JP)
(74) Representative: Laufhütte, Dieter, Dr.-Ing.

(56) References cited:
- EXTENDED ABSTRACTS FALL MEETING (1993), no. 2, 10 October 1993 - 15 October 1993 NEW ORLEANS, NJ, US, page 130 XP 000422306 YUKARI KIBI ET AL. 'charge-discharge characteristics of activated carbon/carbon composite electrodes for electric double layer capacitor'
- IEEE TRANSACTIONS ON COMPONENTS, HYBRIDS AND MANUFACTURING TECHNOLOGY, vol. 16, June 1993 NEW YORK, US, pages 431-436, XP 000400460 JUNJI TABUCHI ET AL. 'Large Capacitance Electric Double Layer Capacitor Using Activated Carbon/Carbon Composite'

## Description

The present invention relates to a process for forming a polarizable electrode for electric double-layer capacitors.

Electric double-layer capacitors are in use in the form of a small but large capacitance capacitor as a backup electric source for memory of microcomputer, etc. Electric double-layer capacitors commercialized currently, however, have a high internal resistance and allows for charging and discharging of only up to about several milliamperes. Hence, it is desired to develop an electric double-layer capacitor capable of being charged with or discharging a large electric current of several amperes to several hundreds of amperes momentarily.

With respect to the polarizable electrode for use in electric double-layer capacitor, capable of being charged with or discharging a large electric current, there have hitherto been made various proposals. There were proposed, for example, a paste-like polarizable electrode obtained by mixing an active carbon powder and an electrolyte [Japanese Patent Application Kokai (Laid-Open) No. 102914/1989] and a polarizable electrode using an active carbon fiber [Japanese Patent Application Kokai (Laid-Open) No. 141629/1991].These polarizable electrodes using an active carbon powder or an active carbon fiber, however, have a high internal resistance owing to the weak contact between active carbon particles, or cause reduction in capacity owing to the falling off of powder or detachment of fiber.

Hence, there was proposed a polarizable electrode obtained by pyrolyzing a mixture of an active carbon powder and a phenol in an inert atmosphere [Japanese Patent Application Kokai (Laid-Open) No. 288361/1992]. In this polarizable electrode, however, an electrolyte is unable to infiltrate sufficiently into the electrode when the electrode is thick and, as a result, the capacitor assembled with the electrode has an increased internal resistance. There was also proposed an activated porous carbon material obtained by pyrolyzing a phenol foam having cells perpendicular to the electrode surface and then activating the resulting material [Japanese Patent Application Kokai (Laid-Open) No. 177713/1992]. In this polarizable electrode obtained by activating a carbon foam of block form, there are no increase in internal resistance and the falling-off of powder; however, the activation remains only at the surface and it is impossible to make the large electrostatic capacity per unit volume or unit weight.

Further, a very small amount of the alkali metal or alkaline earth metal contained in the foam as a foaming agent, when the electrode is assembled into a capacitor, shortens the cycle life of the capacitor.

From the document "Extended Abstracts Fall Meeting No. 2, 10. October-15. October 1993 New Orleans, Page 130 XP 000422306, Yukari Kibi et al. charge-discharge characteristic of activated carbon/carbon composite electrodes for electric double-layer capacitor". In this reference a process for forming a polarizable electrode for electric double-layer capacitors according to the first part of the main claim is known.

The object of the present invention is to provide a process for forming a polarizable electrode for electric double-layer capacitor, which is free from the above-mentioned drawbacks in the prior art and which has a low internal resistance and can be charged with or discharge a large electric current of several amperes to several hundreds of amperes momentarily.

In the course of a study to achieve the above objects, the present inventors thought of an idea that a polarizable electrode having discontinuous portions (e.g. throughholes) on the surface and/or inside can easily be impregnated with an electrolyte and enables easy migration of the ion in said electrode and, as a result, such an electrode has a low internal resistance even though it has a large thickness and need not contain any foaming agent (e.g. alkali metal or alkaline earth metal), whereby an electric double-layer capacitor having a long cycle life may be provided. The present invention made a further study based on the idea and completed the present invention.

The present invention provides:
a method for forming a polarizable electrode for electric double-layer capacitor with the following step:
- pyrolyzing a mixture mainly containing an active carbon, a thermosetting resin, and a vaporizable material in a non-oxidizing atmosphere to obtain a porous active carbon body;
characterized by adding the material in form of fibers.

### Detailed Description of the Invention

The present invention is hereinafter described in detail. The active carbon used in the present invention is not particularly restricted with respect to the type and includes those obtained by carbonizing a natural fiber (e.g. sawdust or coconut husk), an aromatic polycyclic compound present in coal, petroleum or the like, or a synthetic resin of phenolic resin type, acrylic resin type, aromatic polyamide type, cellulose type or the like and then activating the resulting material by an ordinary method. The form of the active carbon may be any of a powder, granules, a fiber, etc. The specific surface area of the active carbon has no particular restriction, either but is preferably 500 m²/g or more.

The thermosetting resin used in the present invention is not particularly restricted with respect to its composition and includes known resins such as polycarbodiimide resin, phenolic resin, furan resin, epoxy resin and the like.

The fiber capable of vaporizing upon heating, used in the present invention is not particularly restricted and can be any synthetic or natural fiber capable of vaporizing at the heat-treating temperature or pyrolyzing temperature adopted in the process (described later) for producing a polarizable electrode for electric double-layer capacitor according to the present invention. The fiber can be exemplified by a polyvinyl alcohol, a polyethylene, a polystyrene, a polypropylene, a polyester, a polyethylene glycol and a cellulose (these are hereinafter abbreviated to "fiber component").

In producing the polarizable electrode of the present invention for electric double-layer capacitor, there is first prepared an active carbon mixture by mixing an active carbon, a thermosetting resin and a fiber component all mentioned above. In this mixing step, there can be used a known method ordinarily used in the mixing of such components, for example, a stirring rod, a kneader, a ball mill, a mixer, a static mixer and a ribbon mixer.

The proportions of the active carbon and the fiber component can be determined depending upon, for example, the intended properties of the polarizable electrode to be produced. For example, the proportion of the active carbon is 100 parts by weight and the proportion of the fiber component is 0.01-100 parts by weight, preferably 0.05-80 parts by weight. When the proportion of the fiber component is less than the range, it may happen that the discontinuous portions of electrode free from any solid active carbon are blocked owing to the shrinkage of electrode during the pyrolyzing step described later and, as a result, the electrode is not well impregnated with an electrolyte and has a high internal resistance. Conversely when the proportion of the fiber component is more than the range, it may happen that the electrode has a low strength and is unable to withstand the actual use.

The proportions of the active carbon and the thermosetting resin can also be determined depending upon, for example, the intended properties of the polarizable electrode to be produced. For example, the proportion of the active carbon is 100 parts by weight and the proportion of the thermosetting resin is 0.5-100 parts by weight, preferably 1-50 parts by weight.

Depending upon the case, there may be used, in addition to the above components, an electrically conductive agent such as expanded graphite, graphite, carbon black, ketjen black, carbon whiskers, metal powder and the like.

The above-prepared active carbon mixture is then molded, as necessary, into a desired shape. This molding step can be conducted by a conventionally known method such as pressure molding, hydrostatic molding, extrusion molding, injection molding, belt pressing, roll pressing or the like. Incidentally, this molding step can be omitted depending upon the shape of the active carbon mixture.

The molded active carbon mixture is heat-treated to vaporize the fiber component present therein. The atmosphere used in this step may be a conventionally known gas, for example, at least one gas selected from non-oxidizing gases such as vacuum, argon, hydrogen and the like, or from oxidizing gases such as air, carbon dioxide, oxygen, propane gas and the like. The heat-treatment temperature used in this step can be determined depending upon, for example, the thermal decomposabilities of the fiber component, active carbon and thermosetting resin present in the active carbon mixture, but is, for example, 100-600°C, preferably 150-550°C.

The heat-treatment step may be omitted because it is conducted to vaporize the fiber component beforehand to shorten the time of the pyrolyzing step described later.

The material obtained by the heat-treatment step is then pyrolyzed. This pyrolyzing step can be conducted by any conventionally known method in, for example, a non-oxidizing atmosphere such as vacuum, argon, hydrogen or the like. The pyrolyzing temperature has no upper limit but the pyrolyzing is conducted for example, at 600-3,000°C, preferably at 700-1,500°C. Pyrolyzing at temperatures higher than 3,000°C invites severe oxidation and wastage of kiln and is not realistic. Pyrolyzing at temperatures lower than 600°C gives an electrode of high internal resistance and of small capacity.

The material obtained by the pyrolyzing step is cut into a desired shape to obtain a polarizable electrode for electric double-layer capacitor. The cutting can be made by any conventionally known method such as cutting by cutter, cutting by ultrasonic wave, or the like.

The cutting may be conducted not after the pyrolyzing step but after or before the heat-treatment step, or may be omitted depending upon the shape of the active carbon mixture.

The thus-obtained polarizable electrode for electric double-layer capacitor according to the present invention comprises a solid active carbon obtained by pyrolyzing a mixture mainly containing an active carbon and a thermosetting resin and has, on the surface and/or inside, discontinuous portions free from said solid active carbon. Herein, the discontinuous portions refer to holes, gaps, dents, grooves, etc. and are formed by the vaporization of the fiber component, or by the deformation or compression of the holes, etc. formed as above, occurring as a result of the shrinkage of the active carbon mixture during its heat-treatment or pyrolyzing.

In the present invention, there is used a fiber component as the component capable of vaporizing upon heating, and the fiber component has a high aspect ratio and tends to align in one direction owing to the pressure applied during molding. Therefore, when the active carbon mixture is heat-treated to vaporize the fiber component and the resulting material is pyrolyzed in an inert gas, the resulting polarizable electrode has discontinuous portions (e.g. throughholes) having a shape corresponding to the shape of the fiber component.

Depending upon the direction of the cutting conducted after heat treatment or pyrolyzing, the polarizable electrode can have holes each having a direction parallel or nearly parallel, or perpendicular or nearly perpendicular to the electrode surface and thereby can easily be impregnated with an electrolyte.

When the discontinuous portions are holes, the small holes having diameters of 1 nm to 5 mm are 95% or more of the total holes present in the polarizable electrode for electric double-layer capacitor according to the present invention. The porosity (the proportion of volume of total holes) in the present polarizable electrode for electric double-layer capacitor is 20-80%.

By using at least a pair of the thus-obtained polarizable electrode for electric double-layer capacitor as a positive electrode and a negative electrode, and appropriate electrolyte impregnated between these electrodes, an electric double-layer capacitor having a low internal resistance according to the present invention can be produced. Preferably, these electrodes are firmly bonded to an appropriate collector electrode.

As the electrolyte, for example, an organic electrolyte obtained by dissolving an electrolyte such as LiAsF₆, LiBF₄, LiPF₆, LiClO₄, tetraalkylammonium, tetrafluoroborate in a solvent such as ethlene carbonate, propylene carbonate, butylene carbonate, dimethyl carbonate, γ-butyrolactone, acetonitrile, 1,2-dimethoxyethane, sulfolane, nitromethane or a mixture thereof, and an aqueous electrolyte obtained by dissolving an electrolyte such as KOH, NaOH, H₂SO₄, HCl, HNO₃, ZnCl, ZnBr₂ in water, can be used.

The present invention is hereinafter described specifically by way of Examples.

### Example 1

There were mixed a polycarbodiimide resin powder (average particle diameter = 10 µm), an active carbon powder (average particle diameter = 10 µm, specific surface area = 1,800 m²/g) and a PVA (polyvinyl alcohol) short fiber (fiber diameter = 20 µm, fiber length = 3 mm). The mixing ratio of the three components is shown in Table 1. In Table 1, each number is by parts by weight (this applies also to Tables 3, 5, 8, 12 and 15).

**Table 1**

| No. | Active carbon | Thermosetting resin | PVA short fiber |
|---|---|---|---|
| 1-1 | 100 | 0.5 | 0.01 |
| 1-2 | 100 | 0.5 | 100 |
| 1-3 | 100 | 100 | 0.01 |
| 1-4 | 100 | 100 | 100 |

Each of the above mixtures was stirred in a ball mill for 24 hours. The resulting material was placed in a square mold of 50 mm x 50 mm (internal dimension) and subjected to pressure molding at a pressure of 30 kg/cm² at 100°C for 30 minutes. The molded article was heat-treated up to 400°C in the air to vaporize the fiber and then pyrolyzed up to 900°C in a nitrogen gas atmosphere. The pyrolyzing product was cut so that the throughholes were perpendicular to the product (electrode) surface, to prepare sheet electrodes (polarizable electrodes) each of 3 mm in thickness. Each electrode was measured for porosity and proportion of small holes of 1 nm to 5 mm in diameter in total holes, by a mercury porosimetry. A collector electrode (a vitreous carbon produced by Nisshinbo Industries, Inc. was used as the collector) was bonded to the polarizable electrode by the use of a conductive adhesive. Two same such laminates were used as a positive electrode and a negative electrode and were vacuum-impregnated with a propylene carbonate solution containing 1 mole/liter of tetrabutylammonium perchlorate, whereby electric double-layer capacitors were produced. A constant current of 1 kHz and 10 mA was passed through each capacitor and the voltage between the electrodes was measured to determine the equivalent series resistance of the capacitor. The porosity, the proportion of small holes of 1 nm to 5 mm in diameter in total holes and the equivalent series resistance are shown in Table 2.

**Table 2**

| No. | Equivalent series resistance (Ω) | Porosity (%) | Proportion of small holes (1 nm to 5 mm in dia.) in total holes (%) |
|---|---|---|---|
| 1-1 | 4.00 | 40 | 95 |
| 1-2 | 1.00 | 80 | 98 |
| 1-3 | 2.00 | 20 | 95 |
| 1-4 | 0.50 | 70 | 96 |

### Example 2

There were mixed a phenolic resin powder (average particle diameter = 10 µm), an active carbon powder (average particle diameter = 10 µm, specific surface area = 1,800 m²/g) and a PVA short fiber (fiber diameter = 20 µm, fiber length = 3 mm). The mixing ratio of the three components are shown in Table 3.

**Table 3**

| No. | Active carbon | Thermosetting resin | PVA short fiber |
|---|---|---|---|
| 2-1 | 100 | 0.5 | 0.01 |
| 2-2 | 10 | 0.5 | 100 |
| 2-3 | 100 | 100 | 0.01 |
| 2-4 | 100 | 100 | 100 |

Each of the above mixtures was stirred, molded and heat-treated in the same manner as in Example 1. The pyrolyzing product was cut so that the throughholes were parallel to the product (electrode) surface, to prepare sheet electrodes (polarizable electrodes) each of 3 mm in thickness. Each electrode was measured for porosity and proportion of small holes of 1 nm to 5 mm in diameter in total holes, by a mercury porosimetry. A collector electrode (a vitreous carbon produced by Nisshinbo Industries, Inc. was used as the collector) was bonded to the polarizable electrode by the use of a conductive adhesive. Using two same such laminates as a positive electrode and a negative electrode, electric double-layer capacitors were produced, and the equivalent series resistance of the capacitor was determined in the same manner as in Example 1. The porosity, the proportion of small holes of 1 nm to 5 mm in diameter in total holes and the equivalent series resistance are shown in Table 4.

**Table 4**

| No. | Equivalent series resistance (Ω) | Porosity (%) | Proportion of small holes (1 nm to 5 mm in dia.) in total holes (%) |
|---|---|---|---|
| 2-1 | 4.20 | 43 | 96 |
| 2-2 | 1.06 | 80 | 99 |
| 2-3 | 2.12 | 20 | 95 |
| 2-4 | 0.53 | 72 | 96 |

### Example 3

There were mixed a polycarbodiimide resin powder (average particle diameter = 10 µm), an active carbon powder (average particle diameter = 10 µm, specific surface area = 1,800 m²/g), a PVA short fiber (fiber diameter = 20 µm, fiber length = 3 mm) and an expanded graphite powder (average particle diameter = 10 µm). The mixing ratio of the four components is shown in Table 5.

**Table 5**

| No. | Active carbon | Polycarbodiimide resin | Expanded graphite | PVA short fiber |
|---|---|---|---|---|
| 3-1 | 100 | 0.5 | 0.01 | 0.01 |
| 3-2 | 100 | 0.5 | 0.01 | 100 |
| 3-3 | 100 | 0.5 | 1000 | 0.01 |
| 3-4 | 100 | 0.5 | 1000 | 100 |
| 3-5 | 100 | 100 | 0.01 | 0.01 |
| 3-6 | 100 | 100 | 0.01 | 100 |
| 3-7 | 100 | 100 | 1000 | 0.01 |
| 3-8 | 100 | 100 | 1000 | 100 |

Each of the above mixtures was stirred, molded and heat-treated in the same manner as in Example 1. The pyrolyzing product was cut so that the throughholes were perpendicular to the product (electrode) surface, to prepare sheet electrodes (polarizable electrodes) each of 3 mm in thickness. Each electrode was measured for porosity and proportion of small holes of 1 nm to 5 mm in diameter in total holes, by a mercury porosimetry. A collector electrode (a vitreous carbon produced by Nisshinbo Industries, Inc. was used as the collector) was bonded to the polarizable electrode by the use of a conductive adhesive. Using two same such laminates as a positive electrode and a negative electrode, electric double-layer capacitors were produced, and the equivalent series resistance of the capacitor was determined in the same manner as in Example 1. The porosity, the proportion of small holes of 1 nm to 5 mm in diameter in total holes and the equivalent series resistance are shown in Table 6.

**Table 6**

| No. | Equivalent series resistance (mΩ) | Porosity (%) | Proportion of small holes (1 nm to 5 mm in dia.) in total holes (%) |
|---|---|---|---|
| 3-1 | 3000 | 41 | 95 |
| 3-2 | 750 | 79 | 98 |
| 3-3 | 100 | 22 | 95 |
| 3-4 | 25 | 75 | 96 |
| 3-5 | 2700 | 31 | 95 |
| 3-6 | 960 | 80 | 99 |
| 3-7 | 30 | 20 | 95 |
| 3-8 | 7 | 70 | 96 |

### Example 4

Using each of the polarizable electrodes prepared in Example 1, a positive electrode and a negative electrode were prepared. They were vacuum-impregnated with an aqueous solution containing 30% by weight of sulfuric acid, whereby electric double-layer capacitors were produced. Each capacitor was determined for equivalent series resistance in the same manner as in Example 1. The results are shown in Table 7. Each capacitor was charged with and discharged a current of 200 A and then was observed. The observation results are shown in Table 18.

**Table 7**

| No. | Equivalent series resistance (mΩ) |
|---|---|
| 4-1 | 65 |
| 4-2 | 15 |
| 4-3 | 31 |
| 4-4 | 8 |

### Example 5

There were mixed a phenolic resin powder (average particle diameter = 10 µm), an active carbon powder (average particle diameter = 10 µm, specific surface area = 1,800 m²/g) and a PVA (polyvinyl alcohol) short fiber (fiber diameter = 20 µm, fiber length = 3 mm). The mixing ratio of the three components is shown in Table 8.

**Table 8**

| No. | Active carbon | Polycarbodiimide resin | PVA short fiber |
|---|---|---|---|
| 5-1 | 100 | 0.5 | 0.01 |
| 5-2 | 100 | 0.5 | 100 |
| 5-3 | 100 | 100 | 0.01 |
| 5-4 | 100 | 100 | 100 |

Each of the above mixtures was stirred, molded and heat-treated in the same manner as in Example 1. The pyrolyzing product was cut so that the throughholes were perpendicular to the product (electrode) surface, to prepare sheet electrodes (polarizable electrodes) each of 3 mm in thickness. Each electrode was measured for porosity and proportion of small holes of 1 nm to 5 mm in diameter in total holes, by a mercury porosimetry. A collector electrode (a vitreous carbon produced by Nisshinbo Industries, Inc. was used as the collector) was bonded to the polarizable electrode by the use of a conductive adhesive in the same manner as in Example 1. Using two same such laminates as a positive electrode and a negative electrode, electric double-layer capacitors were produced and the equivalent series resistance of each capacitor was determined in the same manner as in Example 1. The porosity, the proportion of small holes of 1 nm to 5 mm in diameter in total holes and the equivalent series resistance are shown in Table 9.

**Table 9**

| No. | Equivalent series resistance (Ω) | Porosity (%) | Proportion of small holes (1 nm to 5 mm in dia.) in total holes (%) |
|---|---|---|---|
| 5-1 | 6.00 | 40 | 95 |
| 5-2 | 1.20 | 80 | 98 |
| 5-3 | 2.70 | 20 | 95 |
| 5-4 | 0.70 | 70 | 96 |

### Example 6

Using sheet electrode produced in Example 1 and corresponds to the electric double-layer capacitor No. 1-2, there were produced electric double-layer capacitor in the same manner as Example 1. The capasitor was measured for equivalent series resistances after 1, 100, 500 and 1,000 cycles in the same manner as in Example 1. The results are shown in Table 10.

**Table 10**

| | Cycles (times) | | | |
|---|---|---|---|---|
| | 1 | 100 | 500 | 1000 |
| Equivalent series resistance (Ω) | 1.00 | 1.01 | 1.01 | 1.02 |

### Example 7

Using sheet electrode produced in Example 1 and corresponds to the electric double-layer capacitor No. 1-2, there were produced three electric double-layer capacitors in the same manner as in Example 1. Each capacitor was measured for equivalent series resistance in the same manner as in Example 1. The results are shown in Table 11.

**Table 11**

| | Electrode thickness (mm) | | |
|---|---|---|---|
| | 1 | 3 | 5 |
| Equivalent series resistance (Ω) | 0.8 | 1.0 | 1.2 |

### Comparative Example 1

There were mixed a polycarbodiimide resin powder (average particle diameter = 10 µm) and an active carbon powder (average particle diameter = 10 µm, specific surface area = 1,800 m²/g). The mixing ratios of the two components are shown in Table 12.

**Table 12**

| No. | Active carbon | Polycarbodiimide resin |
|---|---|---|
| Comp. Ex. 1-1 | 100 | 0.5 |
| Comp. Ex. 1-2 | 100 | 100 |

Each of the above mixtures was stirred, molded and heat-treated in the same manner as in Example 1. From each pyrolyzing product was prepared a sheet electrode (polarizable electrode) of 3 mm in thickness. Each polarizable electrode was measured for porosity and proportion of small holes of 1 nm to 5 mm in diameter in total holes, by the mercury porosimetry. A collector electrode (a vitreous carbon produced by Nisshinbo Industries, Inc. was used as the collector) was bonded to the polarizable electrode by the use of a conductive adhesive in the same manner as Example 1. Using two same such laminates as a positive electrode and a negative electrode, electric double-layer capacitors were produced, and each capacitor was determined for equivalent series resistance in the same manner as in Example 1. The porosity, the proportion of small holes of 1 nm to 5 mm in diameter in total holes and the equivalent series resistance are shown in Table 13.

**Table 13**

| No. | Equivalent series resistance (Ω) | Porosity (%) | Proportion of small holes (1 nm to 5 mm in dia.) in total holes (%) |
|---|---|---|---|
| Comp. Ex. 1-1 | 70 | 85 | 99 |
| Comp. Ex. 1-2 | 37 | 10 | 12 |

### Comparative Example 2

Using sheet electrode produced in Example 1 and corresponds to the electric double-layer capacitor No. 1-1, there were produced three electric double-layer capacitors in the same manner as in Example 1. Each capacitor was measured for equivalent series resistance in the same manner as in Example 1. The results are shown in Table 14.

**Table 14**

| | Electrode thickness (mm) | | |
|---|---|---|---|
| | 1 | 3 | 5 |
| Equivalent series resistance (Ω) | 50 | 70 | 280 |

### Comparative Example 3

There were mixed a phenolic resin powder (average particle diameter = 10 µm) and an active carbon powder (average particle diameter = 10 µm, specific surface area = 1,800 m²/g). The mixing ratio of the above two components is shown in Table 15.

**Table 15**

| No. | Active carbon | Phenolic resin |
|---|---|---|
| Comp. Ex. 3-1 | 100 | 0.5 |
| Comp. Ex. 3-2 | 100 | 100 |

Each of the above mixtures was stirred, molded and heat-treated in the same manner as in Example 1. From each pyrolyzing product was prepared a sheet electrode (polarizable electrode) of 3 mm in thickness. Each polarizable electrode was measured for porosity and proportion of small holes of 1 nm to 5 mm in diameter in total holes, by the mercury porosimetry. A collector electrode (a vitreous carbon produced by Nisshinbo Industries, Inc. was used as the collector) was bonded to the polarizable electrode by the use of a conductive adhesive. Using two same such laminates as a positive electrode and a negative electrode, electric double-layer capacitors were produced in the same manner as in Example 1. A constant current of 1 kHz and 10 mA was passed through each capacitor and the voltage between the electrodes was measured to determine the equivalent series resistance of the capacitor. The porosity, the proportion of small holes of 1 nm to 5 mm in diameter in total holes and the equivalent series resistance are shown in Table 16.

**Table 16**

| No. | Equivalent series resistance (Ω) | Porosity (%) | Proportion of small holes (1 nm to 5 mm in dia.) in total holes (%) |
|---|---|---|---|
| Comp. Ex. 3-1 | 100 | 84 | 99 |
| Comp. Ex. 3-2 | 47 | 9 | 11 |

### Comparative Example 4

Using each of the polarizable electrodes prepared in Comparative Example 3, a positive electrode and a negative electrode were prepared. They were vacuum-impregnated with an aqueous solution containing 30% by weight of sulfuric acid, whereby electric double-layer capacitors were produced. Each capacitor was determined for equivalent series resistance in the same manner as in Example 1. The results are shown in Table 17. Each capacitor was charged with and discharged a current of 200 A and then was observed. The observation results are shown in Table 18.

**Table 17**

| No. | Equivalent series resistance (mΩ) |
|---|---|
| Comp. Ex. 4-1 | 30 |
| Comp. Ex. 4-2 | 12 |

**Table 18**

| No. | Appearance of electrodes |
|---|---|
| 4-1 | Normal |
| 4-2 | Normal |
| 4-3 | Normal |
| 4-4 | Normal |
| Comp. Ex. 4-1 | Electrodes collapsed into pieces. |
| Comp. Ex. 4-2 | Electrodes collapsed into pieces. |

### Comparative Example 5

A phenolic foam having a bulk density of 0.1 g/cm³ and a foam direction perpendicular to the surface of the electrode to be prepared therefrom, was pyrolyzed at 900°C in a nitrogen gas atmosphere. The pyrolyzing product was kept for 3 hours in a mixture of nitrogen gas and carbon dioxide gas for activation. The activation product was measured for porosity and proportion of small holes of 1 nm to 5 mm in diameter in total holes, by the mercury porosimetry, which were 15% and 93%, respectively. The activation product was cut into a size of 10 mm (diameter) x 3 mm (thickness) and bonded to a vitreous carbon (a product of Nisshinbo Industries, Inc.) by the use of a conductive adhesive. The resulting laminate was vacuum-impregnated with a propylene carbonate solution containing 1 mole/liter of tetrabutylammonium perchlorate, whereby an electric double-layer capacitor was produced. The capacitor was determined for equivalent series resistances after 1, 100, 500 and 1,000 cycles in the same manner as in Example 1. The results are shown in Table 19.

**Table 19**

| | Cycles (times) | | | |
|---|---|---|---|---|
| | 1 | 100 | 500 | 1000 |
| Equivalent series resistance (Ω) | 21 | 50 | 153 | 221 |

### Comparative Example 6

To each of the two polarizable electrodes prepared in Comparative Example 1, a hole of a size of 8 mm in diameter was made with a drill to prepare two polarizable electrodes. Each electrode was measured for porosity and proportion of small holes of 1 nm to 5 mm in diameter in total holes, by the mercury porosimetry. Each electrode was bonded to a collector electrode (a vitreous carbon produced by Nisshinbo Industries, Inc. was used as the collector) by the use of a conductive adhesive, in the same manner as in Example 1. Using two same such laminates as a positive electrode and a negative electrode, two electric double-layer capacitors were produced in the same manner as in Example 1. The capacitors were measured for electrostatic capacity. The capacitors were determined for equivalent series resistance in the same manner as in Example 1. The porosity, the proportion of small holes of I nm to 5 mm in diameter in total holes, and the equivalent series resistance are shown in Table 20.

**Table 20**

| No. | Equivalent series resistance (Ω) | Porosity (%) | Proportion of small holes (1 nm to 5 mm in dia.) in total holes (%) |
|---|---|---|---|
| Comp. Ex. 6-1 | 200 | 85 | 90 |
| Comp. Ex. 6-2 | 500 | 87 | 10 |

As is clear from the above, the electric double-layer capacitor of the present invention has a sufficiently low internal resistance and yet a long cycle life.

## Claims

1. Process for forming a polarizable electrode for electric double-layer capacitor with the following step:
- pyrolyzing a mixture mainly containing an active carbon, a thermosetting resin, and a vaporizable material in a non-oxidizing atmosphere to obtain a porous active carbon body;
characterized by
adding the material in form of fibers.

2. Process according to Claim 1, wherein the fiber capable of vaporizing upon heating is a synthetic fiber or a natural fiber.

3. Process according to Claim 2, wherein the fiber capable of vaporizing upon heating is a polyvinyl alcohol, a polyethylene, a polystyrene, a polypropylene, a polyester, a polyethylene glycol or a cellulose.

4. Process according to one of the Claims 1 through 3, which comprises a step of molding into a desired shape the mixture mainly containing an active carbon, a thermosetting resin and fibers capable of vaporizing upon heating.

5. Process according to one of the preceding Claims, which comprises a step of cutting into a desired shape.

## Patentansprüche

1. Verfahren zur Herstellung einer polarisierbaren Elektrode für einen elektrischen Doppelschichtkondensator mit dem folgenden Schritt:
Pyrolysieren eines Gemischs, das hauptsächlich aus einer Aktivkohle, einem duroplastischen Harz und einem verdampfbaren Material besteht, in einer nicht-oxidierenden Atmosphäre zum Erhalt eines porösen Aktivkohlekörpers;
gekennzeichnet durch
Zugabe des Materials in Form von Fasern.

2. Verfahren nach Anspruch 1, wobei die bei Erhitzung zum Verdampfen fähige Faser eine synthetische Faser oder eine Naturfaser ist.

3. Verfahren nach Anspruch 2, wobei die bei Erhitzung zum Verdampfen fähige Faser ein Polyvinylalkohol, ein Polyethylen, ein Polystyrol, ein Polypropylen, ein Polyester, ein Polyethylenglycol oder eine Cellulose ist.

4. Verfahren nach einem der Ansprüche 1 bis 3, welches einen Schritt des Formens des Gemischs, das hauptsächlich aus einer Aktivkohle, einem duroplastischen Harz und aus bei Erhitzung zum Verdampfen fähigen Fasern besteht, zu einer gewünschten Form umfaßt.

5. Verfahren nach einem der vorangehenden Ansprüche, welches einen Schritt des Schneidens in eine gewünschte Form umfaßt.

## Revendications

1. Procédé de fabrication d'une électrode polarisable pour un condensateur à double couche avec l'étape suivante :
- pyroliser un mélange contenant principalement un charbon actif, une résine thermodurcissable et une matière vaporisable dans une atomosphère non oxydante pour obtenir un corps en carbone actif poreux ;
caractérisé par
l'addition de la matière sous la forme de fibres.

2. Procédé selon la revendication 1, où la fibre est capable de se vaporiser lors d'un chauffage avec une fibre synthétique ou une fibre naturelle.

3. Procédé selon la revendication 2, où la fibre capable de se vaporiser lors d'un chauffage est un alcool polyvinylique, un polyéthylène, un polystyrène, un polypropylène, un polyester, un polyéthylène glycol ou une cellulose.

4. Procédé selon l'une des revendications 1 à 3, qui comprend une étape de moulage en une forme souhaitée du mélange contenant principalement un carbone actif, une résine thermodurcissable et des fibres pouvant se vaporiser lors du chauffage.

5. Procédé selon l'une quelconque des revendications précédentes, qui comprend une étape de couper à une forme souhaitée.
